# EUROPEAN PATENT APPLICATION

(11) **EP 4 759 130 A1**
(43) Date of publication of application: **17.06.2026**
(21) Application number: 25205210.5
(22) Date of filing: 29.09.2025
(51) Int. Cl.: A01G 25/09, A01G 25/16

(54) **METHOD AND SYSTEM FOR MEASURING THE PERFORMANCE OF A MOBILE IRRIGATION SYSTEM**

(30) Priority: 13.12.2024 IT 202400028425
(71) Applicant: Komet Austria GmbH, 9900 Lienz (AT)
(72) Inventor: DRECHSEL, Arno, 9900 Lienz (AT)
(74) Representative: Maroscia, Antonio

(57) **Abstract**

A method for measuring the performance of an irrigation system **(2)** having a supply line **(6)** for supplying a liquid **(F)** on which there are arranged a plurality of regulating devices **(7)** for the pressure **(P)** of the liquid conveyed to a respective sprinkler **(9),** the method comprising the steps of **a)** providing a measuring system **(1)** comprising a flowmeter **(10)** and a pressure gauge **(12)** which can be associated with a control unit **(13)** provided with a memory unit **(14), b)** storing in the memory unit **(14)** the predetermined values of the flow **(R_{P})** of the liquid **(F)** upstream of the supply line **(6)** and of the pressure values **(P_{(T1)}...P_{(TN)})** of the liquid **(F)** conveyed to each sprinkler **(9)** at each operating moment of the irrigation system **(2), c)** activating the irrigation system **(2)** and the measuring system **(1), d),** measuring at intervals **(T)** the flow **(R_{(T1)}...R_{(TN)})** of liquid **(F)** upstream of the supply line **(6)** and the pressure **(P)** of the liquid **(F)** at the inlet **(P_{IN(T1)}...P_{IN(TN)})** or at the outlet **(P_{OUT(T1)}...P_{OUT(TN)})** of the regulating devices **(7)** positioned at the end of the irrigation system **(2), e)** calculating the deviation **(ΔR, ΔP_{IN}; ΔP_{OUT})** of the measured values with respect to the corresponding predetermined values, **f)** reporting the deviations **(ΔR, ΔP_{IN}; ΔP_{OUT})** greater than the predetermined value **(Δ_{D})** for detecting any malfunctions of the irrigation system **(2).** A system for measuring the performance of an irrigation system **(2).**

## Description

### Field of the invention

The present invention generally relates to the technical field of irrigation systems and it particularly relates to a method for measuring the performance of a mobile irrigation system of the type called centre pivot o linear move system.

The invention also relates to a system for measuring the performance of an irrigation system of the type indicated above.

### Background art

The use of mobile systems having a liquid supply line to which there is connected a plurality of devices for regulating the pressure of the liquid conveyed to a respective sprinkler adapted to distribute the liquid on the ground, has been long known in the field of irrigation systems.

Generally, in such type of irrigation systems, the supply line is arranged on a self-propelling carrying framework along an area of the ground to be irrigated and movable by means of motor-driven wheels, like in the case of irrigation systems of the Centre Pivot or Linear Move System type which are among the most efficient currently existing irrigation systems.

The objective of such irrigation systems is to optimise the agricultural production distributing the irrigation liquid evenly on the ground to be irrigated and in the pre-established amount, without wastage and with low energy consumption.

In order to obtain an even distribution of liquid throughout the ground portion to be irrigated, even when such portion has significant topographical different heights, upstream of each sprinkler there is a device for regulating pressure so that all sprinklers of the irrigation system and regardless of the flow of irrigation liquid, receive the same pressure.

Therefore, a regulating device emits the liquid to be irrigated at a constant pressure regardless of the pressure of the liquid flowing into the regulating device and the required liquid flow.

The flow rate value of the liquid emitted by each sprinkler changes as a function of the position of the latter with respect to the ground to be irrigated and it is calculated before it is installed so as to dispense the amount of liquid required to irrigate with maximum efficiency.

Therefore, the predetermined values of the liquid flow rate are calculated taking into account the topography of the ground portion to be irrigated, the position thereof along the supply line, the climatic conditions, as well as the type of vegetation to be irrigated and composition of the ground.

Typically, the liquid flow rate value deviates from the predetermined values as a function of time of service of the components of the irrigation system, the liquid quality, the wear of materials of the irrigation system and the leakage along the supply line. Such factors generate a drastic decrease in the even distribution of the liquid and the overall performance of the irrigation system.

Such malfunction manifests itself more when the ground portion to be irrigated has a certain topography difference in height.

As a matter of fact, in order to overcome a lowering of the pressure flowing into the regulating devices below the minimum pressure required for the operation thereof and which work in a high altitude area, the user is induced to increase the pressure of the irrigation liquid upstream of the line for supplying the irrigation system, with resulting increase in the total liquid flow in the irrigation system and a wastage of irrigation liquid due to:
- runoff of the irrigation liquid, that is the liquid flows over the surface of the ground as given that the latter cannot absorb it;
- deep percolation of the liquid into the ground, not useful for the growth of irrigated vegetation;
- spraying the dispersed irrigation liquid on the ground resulting in increased water losses due to drift due to the presence of wind and/or evaporation.

This results in a dramatic increase in the operating costs of the mobile irrigation system.

In conclusion, there is a need to identify which irrigation systems are operating at reduced performance due to the malfunction or wear of pressure regulating devices and sprinklers to allow the user to intervene in the repair or replacement of inefficient components.

This requirement is particularly felt in mobile irrigation systems with a large number of regulating devices connected to the respective sprinklers.

### Technical problem

In the light of the prior art, the technical problem that the present invention addresses to solve is to monitor the performance of a mobile irrigation system during its operation by detecting the need for an intervention to replace or repair worn and/or malfunctioning system components, so as to reduce water and energy consumption.

### Summary of the invention

An object of the present invention is to solve the aforementioned problem and overcoming the drawbacks of the prior art by providing a method and a system for measuring the performance of a mobile irrigation system which is highly effective and cost-effective.

A particular object of the present invention is to provide a measuring method and system of the type indicated above which allow to identify the malfunction of the mobile irrigation system.

Another object of the present invention is to provide a measuring method and system of the type indicated above which allow to identify faulty or malfunctioning components or, possibly, missing of the irrigation system very quickly.

A further object of the present invention is to provide a measuring method and system of the type indicated above which allow to intervene to safeguard water resources.

Another object of the present invention is to provide a measuring method and system of the type indicated above which allow to intervene to reduce the operating costs of the irrigation system.

A further object of the present invention is to provide a measuring method and system of the type indicated above which allow to intervene to use a mobile irrigation system while maintaining low operating costs.

Another object of the present invention is to provide a measuring system of the type indicated above which allows to be mounted on the irrigation system to be controlled and to be removed at the end of the measurements, so that it can be reutilised to control other irrigation systems.

The objects mentioned above and others which will be more apparent hereinafter, are achieved by a method for measuring the performance of a mobile irrigation system, according to claim 1, wherein the irrigation system comprises a supply line for supplying an irrigation liquid on which there are arranged a plurality of pressure regulating devices of the liquid conveyed to a respective sprinkler.

The method comprises the following steps: a) providing a measuring system comprising a flowmeter and a pressure gauge which can be associated with an electronic control unit provided with a memory unit, b) storing in the memory unit the nominal or predetermined values of the flow of the liquid upstream of the supply line and the pressure values of the liquid conveyed to each sprinkler at each operating moment of the irrigation system, c) activating the irrigation system and the measuring system d) measuring, at regular intervals, the flow of liquid upstream of the supply line through said flowmeter and the liquid pressure at the inlet and at the outlet of a determined regulating device by means of said pressure gauge.

There are also provided the steps of e) calculating the deviation of the measured values with respect of the nominal or predetermined values by using an electronic control unit, and f) reporting the deviations greater than a predetermined value to detect possible malfunctions of the irrigation system during the irrigation operations.

Furthermore, the step a) provides the use of a barometer and the step d) provides the measuring of the altitude of the determined regulating device selected for the measurements, by using a barometer.

Subsequently to the reporting step f) there is provided a step g) of verifying and analysing the calculated deviations and possible replacement of the components of the low-performing irrigation system.

This combination of characteristics allows to monitor the performance of the system and maintain the excellent operation of a mobile irrigation system over time.

The invention also relates to a system for measuring the performance of a mobile irrigation system, according to claim 9.

Advantageous embodiments of the invention are attained according to the dependent claims.

### Brief description of the drawings

Further characteristics and advantages of the invention will be more apparent in the light of the detailed description of a preferred but not exclusive embodiment of a method and a system for measuring the performance of a mobile irrigation system like the ones mentioned above, shown by way of non-limiting example with reference to the drawings below, wherein:
**FIGS. 1** and **2** are a schematic view of a mobile irrigation system respectively in conditions of low and high operation performance;
**FIG. 3** is a schematic view of the measuring method according to the invention;
**FIG. 4** is a schematic view of the measuring system according to the invention;
**FIG. 5** is a top schematic view of a mobile irrigation system of the centre pivot type adapted to irrigate a ground portion that is substantially circular and operating in some steps of the method of Fig. 3;
**FIG. 6** is a schematic view of the altitude development of the ground portion to be irrigated by the system of Fig. 5;
**FIGS. 7** and **8** are a schematic representation of the developments of the pressure and of the irrigation liquid flow respectively in the conditions of the system of Fig. 1 and of Fig. 2;
**FIG. 9** is a schematic view of a detail of the system of Fig. 4.

### Detailed description of a preferred embodiment

With particular reference to the figures, there is shown a system, generally designated with reference numeral **1,** for measuring the performance of a mobile irrigation system **2** adapted to distribute an irrigation liquid **F,** generally water, on a ground to be irrigated **G.**

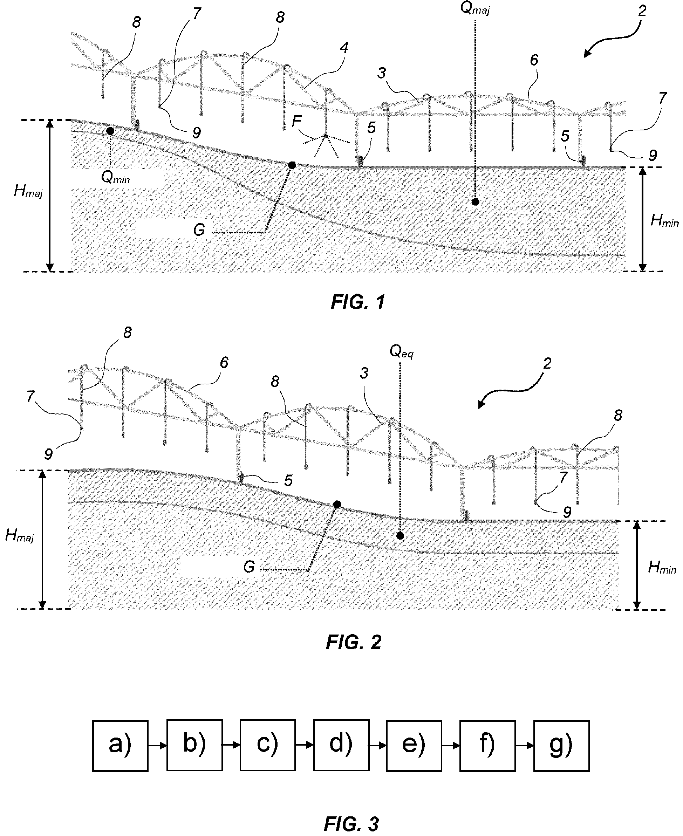

As shown in **FIGS. 1, 2** and **4****,** the irrigation system **2,** of the rotary pivot type or of the translating linear type, comprising a load-bearing structure **3** typically formed by a framework beam with vertical or inclined supports **4** provided with wheels **5** for the displacement on the ground **G.**

In a per se known manner, the system **2** comprises at least one supply line 6 for supplying the irrigation liquid **F,** essentially formed by conduit fixed on the load-bearing structure **3,** on which there are arranged a plurality of regulating devices **7A...7N** for regulating the pressure of the irrigation liquid **F.**

Each regulating device **7** can be fluidically connected to the supply line **6** directly by means of a fitting, not shown in the figures, or by means of a respective drop pipe **8** as better shown in the attached figures.

Furthermore, each regulating device **7A...7N** is fluidically connected to a respective sprinkler **9A...9N** to which the irrigation liquid **F** is conveyed for distribution thereof on the ground **G.**

Suitably, the sprinkler **9** can be directly connected downstream of the regulating device **7** or by means of a piping section, not shown in the figures.

In a per se known manner, with a configuration of the system **2** of the type described above, the pressure regulating devices **7,** the sprinklers **9** and the components of the sprinklers **9** deteriorate over time, generating a drastic drop in the distribution evenness of the irrigation liquid **F** and, therefore, the performance of the irrigation system **1.**

Such drop in performance manifests itself even more when the ground portion to be irrigated **G** has a topography height difference given that the amount of irrigation liquid **F** distributed on the ground **G** is reversely proportional to the height thereof, as better schematised in **FIG. 1****.**

In such schematisation, it can be observed that, due to the slope of the ground **G,** the irrigation liquid **F** both in greater amount **Qₘₐⱼ** given that it is accumulated in the areas having smaller altitude **Hₘᵢₙ** and in the smaller amount **Qₘᵢₙ** in the higher altitude areas **Hₘₐⱼ**, to the detriment of the evenness of distribution of the liquid **F,** and, therefore, the system **2** has low operating performance.

By way of example, the high distribution evenness of the irrigation liquid **F** is schematised in **FIG. 2**, in which the entire ground **G** to be irrigated has the same amount **Q_{eq}** of liquid **F,** and, therefore, the system **2** has high operating performance.

The measuring system **1** according to the invention comprises a flowmeter **10** configured to measure the flow **R** of irrigation liquid **F** upstream of the supply line **6,** at regular time intervals **of** operation or travel carried out during the operation indicated in their entirety with reference numeral **T.**

Naturally, the interval values **T,** whether time or space, may be pre-established and decided by the user of the system **1.**

The system **1** can comprise a barometer **11** configured to measure, at regular intervals **T,** the altitude **H** of a determined regulating device **7** positioned on the system **2.**

Solely by way of non-limiting example, the regulating device **7** used for the measurements can be the one positioned at the end of the system **2** or the last device **7N,** or the one more spaced apart from the flowmeter **10.**

However, the device **7** used for the measurements can also consist of a device **7** positioned at any point of the system **2.**

Furthermore, there is provided a pressure gauge **12** configured to measure, at regular intervals **T,** the pressure **P** of the irrigation liquid **F** at the inlet **P_{IN}** or at the outlet **P_{OUT}** of the determined regulating device **7** taken into account for the measurements.

In other words, during the operation of the system **2,** the flowmeter **10** measures a plurality of flow values **R_{(T1)}...R_{(TN)}**, the barometer **11** measures a plurality of altitude values **H_{(T1)}...H_{(TN)}** and the pressure gauge **12** measures a plurality of pressure values at the inlet and/or at the outlet **P_{IN(T1)}...P_{IN(TN)}**; **P_{OUT(T1)}...P_{OUT(TN)}.**

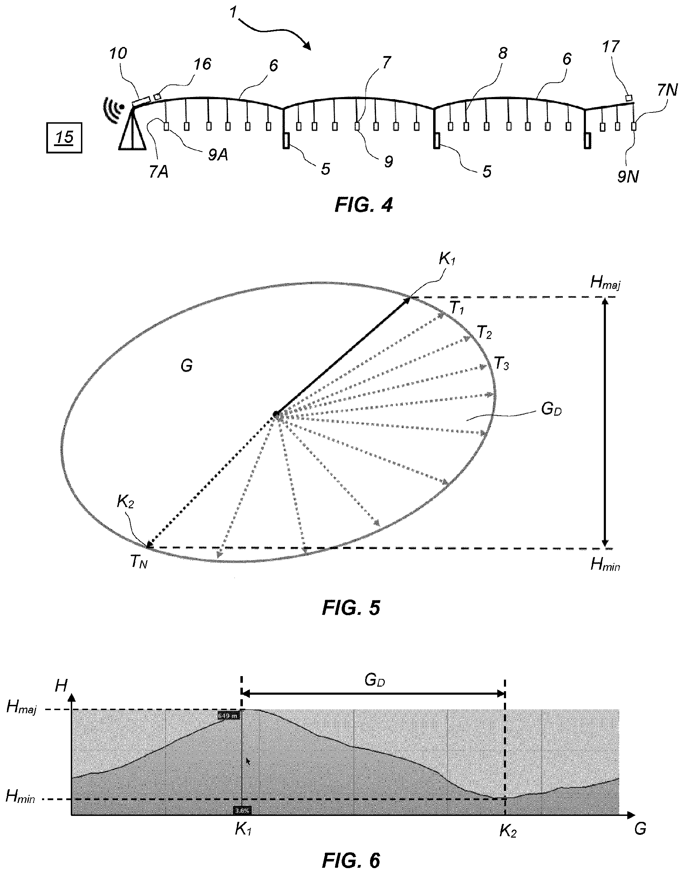

Preferably, the measurement of the aforementioned plurality of values **R_{(T1)}...R_{(TN)}, P_{IN(T1)}...P_{IN(TN)}, P_{OUT(T1)}...P_{OUT(TN)}** is not carried out throughout the operation of the system **2** along the ground to be irrigated **G,** but in a ground portion **G_{D}** to be irrigated, comprised between a first geographical point **K₁** having a greater altitude **Hₘₐⱼ** and a second geographical point **K₂** having a smaller altitude **Hₘᵢₙ,** as better shown in **FIGS. 5-6****.**

The system **1** further comprises an electronic control unit **13** provided with a memory unit **14.**

The memory unit **14** is configured to memorise the nominal or predetermined values of the flow **R_{P}** of the liquid **F** upstream of the supply line **6** and the plurality of pressure values **P_{(T1)}...P_{(TN)}** of the liquid **F** conveyed to each sprinkler **9A...9N** in any operating interval **T** of the system **2.**

According to the invention, the electronic control unit **13** is configured to calculate the deviation **ΔR; ΔP_{IN}; ΔP_{OUT}** of the plurality of measured flow **R_{(T1)}...R_{(TN)}**, inlet pressure **P_{IN(T1)}...P_{IN(TN)}** and outlet pressure **P_{OUT(T1)}...P_{OUT(TN)}** values with respect to nominal or predetermined values **R_{P}**; **P_{(T1)}...P_{(TN)}** and report the deviations **ΔR; ΔP_{IN}; ΔP_{OUT}** that are greater than a predetermined reference value **Δ_{D}** so as to detect any malfunctions of the system **2** during the irrigation operations.

It should be observed that the measuring system **1** can be removably positioned on the system **2** so as to allow the re-utilisation thereof for other irrigation systems **2** whose operating performance requires to be measured.

In this manner, the user of the system **2** on which there is removably installed the measuring system **1** can verify the performance during the operation thereof and the resulting lack of distribution evenness of the irrigation liquid **F** and, evaluating the reported deviations **ΔR; ΔP_{IN}; ΔP_{OUT},** decide to replace the components of the low-performing system **2.**

For example, decide to replace the entire plurality of regulating devices **7A...7N** and/or sprinklers **9A...9N** to return to the predetermined conditions and therefore to maintain the excellent operation of the mobile irrigation system **2** over time.

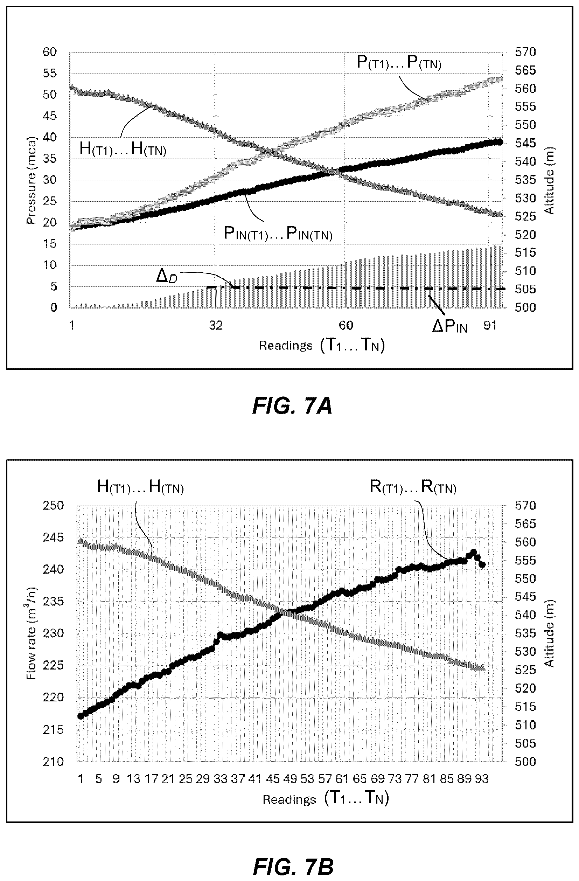

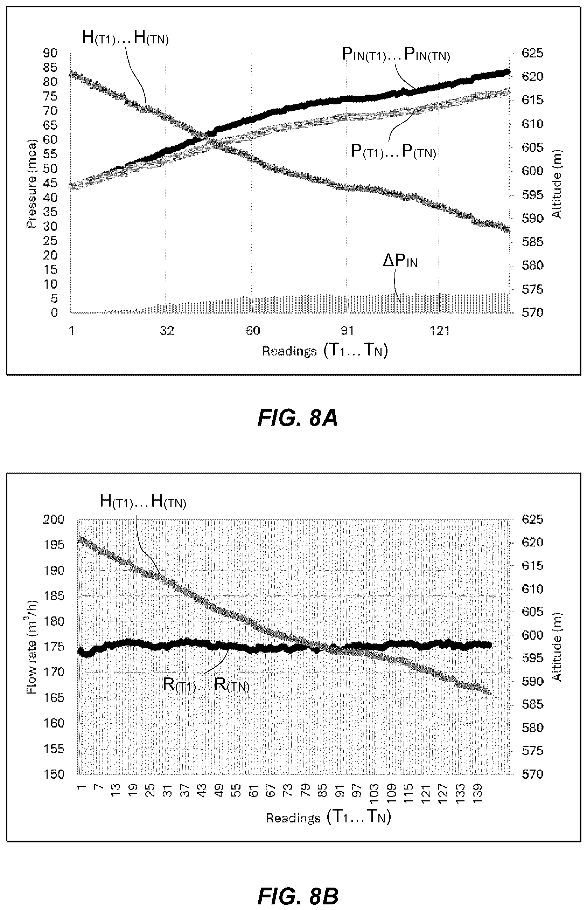

**FIGS. 7** and **8****,** schematically show the aforementioned plurality of measured values and predetermined values respectively in the low- and high-performance operating conditions of an irrigation system **2** of the centre pivot type, configured to irrigate a circular ground **G.**

It should be observed that in such schematisations, there is taken in to account the pressure at the inlet **P_{IN(T1)}...P_{IN(TN)}** of the regulating device **7** taken into account, but the same conclusions would apply if the tests were repeated considering its pressure at the outlet **P_{OUT(T1)}...P_{OUT(TN)}**.

The same figures also show the topography changes of the slope **H_{(T1)}...H_{(TN)}** in the measurement range between **T₁** and **T_{N}**.

**FIG. 7B** shows that in the low-performance conditions of the system **2** there is no irrigation evenness visible from the increase of the measured flow values **R_{(T1)}...R_{(TN)}** in the measurement range between **T₁** and **T_{N}.**

Given the low-performance conditions, **FIG. 7A** clearly shows the increase in pressure at the inlet **P_{IN(T1)}...P_{IN(TN)}** of the regulating device **7** taken into account with a high deviation **ΔP_{IN}** of the aforementioned measured value from the nominal or predetermined pressure values **P_{(T1)}...P_{(TN)}.**

Vice versa, **FIG. 8B** shows that in high-performance conditions of the system **2,** the measured flow values **R_{(T1)}...R_{(TN)}** in the measurement range between **T₁** and **T_{N}** are substantially the same and constant demonstrating the irrigation evenness.

In these conditions, **FIG. 8A** shows in increase in the pressure at the inlet **P_{IN(T1)}...P**_{**IN(TN**)} but with a very low deviation **ΔP_{IN}** from the nominal or predetermined pressure values **P_{(T1)}...P_{(TN)}**.

In order to improve the deviation reports **ΔR, ΔP_{IN}; ΔP_{OUT}** to the user there is provided a remote display **15** adapted to receive the aforementioned data measured and calculated by the electronic control **13** and memory **14** unit.

Preferably, the remote display **15** can comprise a smartphone or a portable tablet adapted to receive the data via remote wireless connection or loT solutions.

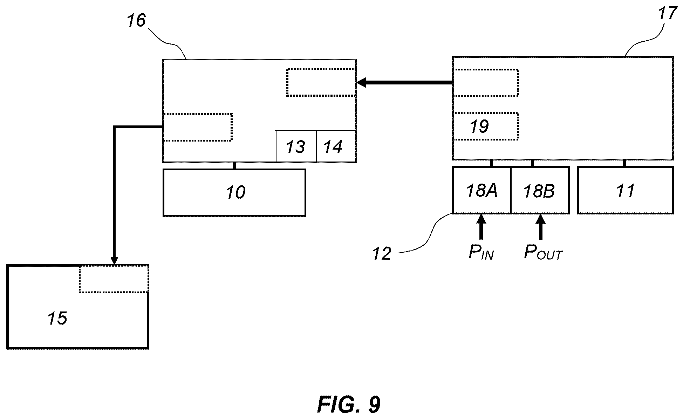

In an embodiment of the invention, the electronic control unit **13** and the memory unit **14** are installed in a first watertight box **16** removably positioned upstream of the supply line **6** to which there is connected the flowmeter **10** in a wired or wireless fashion, as better shown in **FIGS. 4** and **9**.

Furthermore, there is provided a second watertight box **17** adapted to contain the barometer **11** and the pressure gauge **12** installed, also removably, in proximity of the determined regulating device **7** taken into account for the measurements.

The second watertight box **17** can also comprise a pair of pressure transducers **18A, 18B** configured to translate into electrical signals the pressure values at the inlet **P_{IN(T1)}...P_{IN(TN)}** and at the outlet **P_{OUT(T1)}...P_{OUT(TN)}** measured by the pressure gauge **12.**

Preferably, the measuring system **1** comprises a GPS device **19** configured to monitor the geographical position and/or the altitude of the regulating device **7** taken into account, during the operation thereof and installed in the second watertight box **17.**

According to a further aspect of the invention, there is provided a method for measuring the performance of a mobile irrigation system **2** of the type described above, schematised in **FIG.3****.**

The method according to the invention comprises a first step of **a)** providing the measurement system **1** which comprises the flowmeter **10** and the pressure gauge **12** which can be associated with the electronic control unit **13** provided with the memory unit **14.**

Subsequently, there are provided the steps of **b)** storing in the memory unit **14** the nominal or predetermined values of the flow **R_{P} of** the liquid **F** upstream of the supply line **6** and the plurality of pressure values **P_{(T1)}...P_{(TN)}** of the liquid **F** conveyed to each sprinkler **9A...9N** at each operating moment of the system **2** and **c)** activating the system **2** and the measuring system **1.**

Furthermore, there is provided a step of **d)** measuring, at regular intervals **T,** the flow **R_{(T1)}...R_{(TN)}** of the liquid **F** upstream of the supply line **6** through the flowmeter **10** and the pressure **P** of the irrigation liquid **F** at the inlet **P_{IN(T1)}...P_{IN(TN)}** or at the outlet **P_{OUT(T1)}...P_{OUT(TN)}** of a determined regulating device **7** through the pressure gauge **12.**

Advantageously, the measurement step **d)** is carried out between a first **K₁** and a second geographical operation point **K₂** of the system respectively having the greater **Hₘₐⱼ** and smaller altitude **Hₘᵢₙ** or in a section comprised between the first **K₁** and the second point **K₂.**

The measurement step **d)** also comprises monitoring the position of the determined regulating device **7** taken into account for the measurements through the GPS device **19.**

The figures show that the step **a)** of the method according to the invention provides for the use of a barometer **11** and the measurement step **d)** provides for the measurement of the altitude **H_{(T1)}...H_{(TN)}** of the determined regulating device **7** taken into account for the measurements through the barometer **11.**

Lastly, there are provided the steps of **e)** calculating the deviation **ΔR; ΔP_{IN}; ΔP_{OUT}** of the measured flow values **R_{(T1)}...R_{(TN)},** pressure at the inlet **P_{IN(T1)}...P_{IN(TN)}** and/or pressure at the outlet **P_{OUT(T1)}...P_{OUT(TN)}** with respect to the nominal or predetermined values **R_{P}; P_{(T1)}...P_{(TN)}** through the electronic control unit **13** and **f)** reposting the deviation **ΔR; ΔP_{IN}; ΔP_{OUT}** greater than a predetermined value **Δ_{D}** in order to detect possible malfunctions of the system **2** during the irrigation operations.

As better described above, the measurement, calculation and reporting steps **d)-f)** provide for the sending of the measured data **H_{(T1)}...H_{(TN)}, R_{(T1)}...R_{(TN)}, P_{IN(T1)}...P_{IN(TN)}** and/or **P_{OUT(T1)}...P_{OUT(TN)}** and calculated data **ΔR; ΔP_{IN}; ΔP_{OUT}** to a remote display device **15.**

Preferably, the sending of the aforementioned measured and calculated data occurs through a wirelessly system with WiFi and/or LoRa network, or other equivalent transmission means, as better shown in **FIGS. 9****.**

Obviously, the reporting step **f)** is followed by a step of **g)** verifying and analysing the calculated deviations **ΔR, ΔP_{IN}; ΔP_{OUT}** and possibly the replacement of the components of the low-performing system **2.**

By way of example, the step **g)** may comprise the replacement of the low-performing regulators **7** or irrigators **9.**

As better described above, there can be provided a further step of removing the measurement system **1** to allow the re-utilisation thereof for other irrigation systems **2** whose operating performance requires to be measured.

In the light of the description above, it is clear that the measuring system and the measuring method according to the invention achieve the pre-established objects and in particular they allow to maintain the excellent operation of a mobile irrigation system over time.

The system and method according to the invention are susceptible to numerous modifications and variants all falling within the inventive concept outlined in the attached claims.

Although the system and the method have been described with particular reference to the attached figures, the reference numerals used in the description and in the claims are meant for improving the intelligibility of the invention and do not limit the claimed scope of protection in any manner whatsoever.

Throughout the description, reference to "an embodiment" or "the embodiment" or "some embodiments" indicate that a particular characteristic, structure or element described is comprised in at least one embodiment of the object of the present invention.

Furthermore, the particular characteristics, structures or elements may be combined in any appropriate fashion in one or more embodiments.

### Industrial applicability

The present invention can be applied at industrial level because it can be manufactured on industrial scale by industries belonging to the field of building and designing irrigation systems.

## Claims

1. A method for measuring the performance of a mobile irrigation system **(2)** having a supply line **(6)** for supplying an irrigation liquid **(F),** connected to a plurality of regulating devices **(7)** for the pressure **(P)** of the liquid **(F)** conveyed to a respective sprinkler **(9),** which method comprising the following steps:
**a)** providing a measuring system **(1)** comprising a flowmeter **(10)** and a pressure gauge **(12)** which can be associated with an electronic control unit **(13)** provided with a memory unit **(14);**
**b)** storing in said memory unit **(14)** the nominal or predetermined values of the flow **(R_{P})** of the liquid **(F)** upstream of the supply line **(6)** and of the pressure values **(P_{(T1)}...P_{(TN)})** of the liquid **(F)** conveyed to each sprinkler **(9)** at each operating time of the irrigation system **(2);**
**c)** activating the irrigation system **(2)** and said measuring system **(1);**
**d)** dynamically and instantaneously measuring at regular intervals **(T),** the flow **(R_{(T1)}...R_{(TN)})** of liquid **(F)** upstream of the supply line **(6)** by means of said flowmeter **(10)** and of the pressure **(P)** of the liquid **(F)** at the inlet **(P_{IN(T1)}...P_{IN(TN)})** and/or outlet **(P_{OUT}(_{T1)}...P_{OUT(TN)})** of a determined regulating device **(7)** of the irrigation system **(2)** by means of said pressure gauge **(12);**
**e)** calculating the deviation **(ΔR, ΔP_{IN}; ΔP_{OUT}) of** the instantaneous measured values **(R_{(T1)}...R_{(TN)}, P_{IN(T1)}...P_{IN(TN)}, P_{OUT(T1)}...P_{OUT(TN)})** with respect to the corresponding nominal or predetermined values **(R_{P}, P_{(T1)}...P_{(TN)})** by means of said electronic control unit **(13);**
**f)** reporting the deviations **(ΔR, ΔP_{IN}; ΔP_{OUT})** greater than a predetermined value **(Δ_{D})** to detect possible malfunctions of the irrigation system **(2)** during irrigation operations.

2. Method as claimed in claim 1, wherein said dynamic measurement step **d)** is carried out between a first **(K₁)** and a second geographical operation point **(K₂)** of the irrigation system **(2)** having respectively the highest **(Hₘₐⱼ)** and the lowest altitude **(Hₘᵢₙ)** or in section comprised between said first **(K₁)** and said second geographical point **(K₂).**

3. Method as claimed in claim 1, wherein said step **a)** provides the use of a barometer **(11)** and said step **d)** provides the measurement of the altitude **(H)** of said determined regulating device **(7)** by means of said barometer **(11).**

4. Method as claimed in claim 1, wherein said steps **d) - f)** provide the sending of the measured data **(R_{(T1)}...R_{(TN)}, P_{IN(T1)}...P_{IN(TN)}, P_{OUT(T1)}...P_{OUT(TN)})** and of the calculated data **(ΔR; ΔP_{IN}; ΔP_{OUT})** to a remote display device **(15),** the measured data being sent via remote wireless connection or loT solutions.

5. Method as claimed in claim 4, wherein the sending of said measured data **(H_{(T1)}...H_{(TN)}, R_{(T1)}...R_{(TN)}, P_{IN(T1)}...P_{IN(TN)}, P_{OUT(T1)}...P_{OUT(TN)})** and calculated data **(ΔR; ΔP_{IN}; ΔP_{OUT})** occurs through a wirelessly system with a WiFi and/or LoRa network or other equivalent transmission means.

6. Method as claimed in claims 1 and 3, wherein said step **a)** comprises the removable positioning of said flowmeter **(10),** said electronic control unit **(13)** and said memory unit **(14)** upstream of said supply line **(6),** said step **a)** comprising the removable positioning of said barometer **(11)** and said pressure gauge **(12)** close to said determined regulating device **(7).**

7. Method as claimed in claim 1, wherein said reporting step **f)** is followed by a step **g)** of verifying and analysing the calculated deviations **(ΔR, ΔP_{IN}; ΔP_{OUT})** and possible replacement of the components of the low-performing irrigation system **(2).**

8. Method as claimed in claim 2, wherein said step **d)** comprises the monitoring of the position and/or altitude of said determined regulating device **(7)** by means of a GPS device **(19).**

9. A system **(1)** for measuring the performance of a mobile irrigation system **(2)** having a supply line **(6)** of a liquid **(F)** connected to a plurality of regulating devices **(7)** for the pressure **(P)** of the liquid **(F)** conveyed to a respective sprinkler **(9),** wherein the system **(1)** comprises:
- a flowmeter **(10)** configured to measure, at regular intervals **(T),** the flow **(R_{(T1)}...R_{(TN)})** of liquid upstream of the supply line **(6);**
- a pressure gauge **(12)** configured to measure, at said regular intervals **(T),** the pressure **(P)** of the liquid **(F)** at the inlet **(P_{IN(T1)}...P_{IN(TN)})** and/or at the outlet **(P_{OUT(T1)}...P_{OUT(TN)})** of a determined regulating device **(7);**
- an electronic control unit **(13)** provided with a memory unit **(14);**
wherein said memory unit **(14)** is configured to store the nominal or predetermined values of the flow **(R_{P})** of the liquid **(F)** upstream of the supply line **(6)** and the pressure values **(P_{(T1)}...P_{(TN)})** of the liquid **(F)** conveyed to each sprinkler **(9)** at each moment of operation of the irrigation system **(2);**
wherein said electronic control unit **(13)** is configured to calculate the deviation **(ΔR, ΔP_{IN}; ΔP_{OUT})** of the measured values **(R_{(T1)}...R_{(TN)}, P_{IN(T1)}...P_{IN(TN)}, P_{OUT(T1)}...P_{OUT(TN)})** with respect to the corresponding nominal or predetermined values **(R_{P}, P_{(T1)}...P_{(TN)})** and to report deviations **(ΔR; ΔP_{IN}; ΔP_{OUT})** greater than a predetermined value **(Δ_{D})** to detect possible malfunctions of the irrigation system **(2)** during irrigation operations.

10. System as claimed in claim 9, wherein there is provided a remote display **(15)** adapted to receive the measured data **(R_{(T1)}...R_{(TN)}, P_{IN(T1)}...P_{IN(TN)}, P_{OUT(T1)}...P_{OUT(TN)})** and calculated data **(ΔR; ΔP_{IN}; ΔP_{OUT})** by said electronic control units **(13).**

11. System as claimed in claim 9, wherein there is provided a barometer **(11)** configured to measure, at regular intervals **(T),** the altitude **(H)** of said determined regulating device **(7).**

12. System as claimed in claim 11, wherein said electronic control unit **(13)** and memory unit **(14)** are installed in a first watertight box **(16)** that is removably positioned upstream of the supply line **(6)** to which said flowmeter **(10)** is connected, said barometer **(11)** and pressure gauge **(12)** being installed in a second watertight box **(17)** that is removably positioned close to said determined regulating device **(7).**

13. System as claimed in claim 9, wherein said second watertight box **(17)** comprises a GPS device **(19)** configured to monitor the position of the regulating device **(7)** positioned at the end of the irrigation system **(2)** during the operation thereof.
